# EUROPÄISCHE PATENTSCHRIFT

(11) **EP 1 090 472 B1**
(45) Veröffentlichungstag und Bekanntmachung des Hinweises auf die Patenterteilung: **03.04.2002**
(21) Anmeldenummer: 99939954.6
(22) Anmeldetag: 25.06.1999
(51) Int. Cl.: H04J 14/02

(54) **VERFAHREN ZUR ERFASSUNG UND/ODER REGELUNG DER SENDEWELLENLÄNGEN VON SENDEELEMENTEN EINER OPTISCHEN WELLENLÄNGENMULTIPLEX-SENDEEINHEIT UND ENTSPRECHENDE WELLENLÄNGENMULTIPLEX-SENDEEINHEIT**
METHOD FOR DETECTING AND/OR CONTROLLING THE TRANSMISSION WAVELENGTHS OF TRANSMITTING ELEMENTS OF AN OPTICAL WAVELENGTH MULTIPLEX TRANSMISSION UNIT AND A CORRESPONDING WAVELENGTH MULTIPLEX TRANSMISSION UNIT
PROCEDE POUR DETECTER ET/OU REGULER LES LONGUEURS D'ONDES D'EMISSION D'ELEMENTS EMETTEURS D'UNE UNITE D'EMISSION OPTIQUE MULTIPLEXEE EN LONGUEUR D'ONDES, ET UNITE D'EMISSION OPTIQUE MULTIPLEXEE EN LONGUEUR D'ONDES CORRESPONDANTE

(30) Priorität: 26.06.1998 DE 19828615
(43) Veröffentlichungstag der Anmeldung: 11.04.2001
(73) Patentinhaber: AIFOTEC GmbH, 82152 Martinsried (DE)
(72) Erfinder: MÜLLER, Claus-Georg, D-82340 Feldafing (DE)
(74) Vertreter: Eder, Thomas, Dr.-Ing.
(86) Internationale Anmeldenummer: DE9901866
(87) Internationale Veröffentlichungsnummer: WO0001106

(56) Entgegenhaltungen:
- US-A- 5 589 970
- PATENT ABSTRACTS OF JAPAN vol. 1997, no. 03, 31. März 1997 (1997-03-31) & JP 08 293853 A (HITACHI LTD), 5. November 1996 (1996-11-05)
- PATENT ABSTRACTS OF JAPAN vol. 1996, no. 07, 31. Juli 1996 (1996-07-31) & JP 08 079218 A (CANON INC), 22. März 1996 (1996-03-22)

## Beschreibung

Die Erfindung betrifft ein Verfahren zur Erfassung oder Regelung der Sendewellenlängen von Sendeelementen einer optischen Wellenlängenmultiplex-Sendeeinheit sowie eine entsprechende Wellenlängenmulitplex-Sendeeinheit, welche die Realisierung des erfindungsgemäßen Verfahrens ermöglicht. Bei optischen Sendern, insbesondere bei Laserdioden, wird die Mittenwellenlänge des Sendespektrums von verschiedenen Parametern beeinflusst, beispielsweise der Temperatur des Sendeelements, die ihrerseits von der mittleren Stromstärke abhängt, und der Modulationsfrequenz. Eine Veränderung bzw. ein Wandern der Mittenwellenlänge ist jedoch insbesondere bei einer Signalübertragung über einen einzigen Lichtwellenleiter im Wellenlängenmultiplex von Nachteil, da hierdurch ein Übersprechen eines Kanals auf einen oder mehrere benachbarte Kanäle entstehen bzw. verstärkt werden kann.

Es ist deshalb regelmäßig erforderlich, eine Temperaturregelung des optischen Sendeelements vorzunehmen, um sowohl die Sendeleistung als auch die Mittenwellenlänge des Sendeelements innerhalb gewünschter Grenzen konstant zu halten. Hierzu kann beispielsweise ein Peltier-Kühlelement eingesetzt werden, welches gleichzeitig ein Überhitzen des Sendeelements bei höheren Sendeleistungen vermeidet. Da bei einer Temperaturregelung jedoch lediglich die Temperatur des Sendeelements an einer bestimmten Stelle erfasst wird, kann hierdurch ein konstant halten der Mittenwellenlänge des Sendespektrums nicht mit der für die Übertragung im Wellenlängenmultiplex erforderlichen Genauigkeit gewährleistet werden. Zudem muss bei Wellenlängenmultiplex-Sendeeinheiten regelmäßig eine Möglichkeit zur Abstimmung der Sendewellenlängen vorgesehen werden, um fertigungsbedingte Toleranzen im Sendespektrum der Sendeelemente ausgleichen zu können. Dies erfordert einen Monitoring der Mittenwellenlänge der Sendeelemente.

Die im Stand der Technik bekannte Möglichkeit, vorzugsweise im Sendeelement integrierte Monitordioden für das Überwachen der (mittleren) Sendeleistung einzusetzen, bedeutet bei Wellenlängenmultiplex-Sendeeinheiten einen hohen Aufwand, da jedes Sendeelement mit einer Monitordiode ausgerüstet sein muss. Dies kompliziert den Aufbau der Sendeelemente.

Ausgehend von diesem Stand der Technik liegt der Erfindung die Aufgabe zugrunde, ein Verfahren zur Erfassung oder Regelung der Sendewellenlänge von Sendeelementen in einer optischen Wellenlängenmultiplex-Sendeeinheit zu schaffen, bei dem mit geringem Aufwand eine Erfassung bzw. Regelung der Mittenwellenlängen der optischen Sendeelemente realisiert werden kann. Des Weiteren liegt der Erfindung die Aufgabe zugrunde, eine entsprechende optische Wellenlängenmultiplex-Sendeeinheit zu schaffen.

Die Erfindung geht von der Kenntnis aus, dass die Mittenwellenlänge eines optischen Sendeelements in der Weise konstant gehalten werden kann, dass ein geringer Teil des Ausgangssignals abgezweigt und diejenige optische Leistung ermittelt wird, die in den spektralen Bereichen auf einer oder beiden Seiten des gewünschten schmalen Sendespektrums enthalten ist. Verschiebt sich das Sendespektrum des optischen Sendeelements um einen kleinen Wellenlängenbetrag δλ in einer bestimmten Richtung, so vergrößert sich die spektrale Leistung in demjenigen Längenwellenbereich, der in dieser Richtung dem gewünschten schmalen Sendespektrum benachbart ist. In entsprechender Weise nimmt die Leistung auf der jeweils anderen Seite des gewünschten Sendespektrums ab.

Erfindungsgemäß werden die Ausgangssignale mehrerer optischer Sendeelemente (7) mit jeweils einem optischen Sendespektrum (15) unterschiedlicher Mittenwellenlänge (λₛⱼ) jeweils einem optischen Eingang (E₂, E₄,..., Eₙ₁) einer optischen Wellenlängenmonitoring- und Koppeleinheit (3) zugeführt, welche die Ausgangssignale an einem oder mehreren optischen Ausgängen (A) zu einem Wellenlängenmultiplexsignal zusammenführt, wobei die Wellenlängenmonitoring- und Koppeleinheit (3) so ausgebildet ist, dass zwischen einem, mehreren oder allen Eingängen (E₂, E₄,..., Eₙ₋₁), welchen das Ausgangssignal eines Sendeelements (7) zugeführt wird, und einem oder mehreren weiteren, nicht mit Sendeelementen (7) verbundenen Eingängen (E₁, E₃,..., Eₙ) ein optischer Pfad vorhanden ist, in dem eine schmalbandige Hochpass- oder Tiefpassfilterung erfolgt. Die Filtercharakteristik ist in dem Pfad dabei so gewählt, dass sich bei einer Verschiebung der Mittenwellenlänge des Sendespekrums (15) eines Sendeelements (7), dessen Signal in diesen Pfad gelangt, die gesamte spektrale Leistung des mit der gewählten Charakteristik gefilterten Signals verändert. Das an dem einen oder den mehreren weiteren Eingängen (E₁, E₃,..., Eₙ) auftretende gefilterte optische Signal wird jeweils einem optischen Empfangselement (9) zugeführt, dessen Ausgangssignal zur Erfassung der Lage und/oder zur Regelung der Lage des Sendespektrums (15) eines oder mehrerer der optischen Sendeelemente (7) ausgewertet wird. Anstelle einer kombinierten Wellenlängenmonitoring- und Koppeleinheit (3) kann auch eine separate Wellenlängenmonitoringeinheit (30) verwendet werden, welche hinsichtlich der Filterung der Sendesignale in gleicher Weise aufgebaut sein kann. Den betreffenden Eingängen wird in diesem Fall ein Bruchteil der Leistung der Ausgangssignale der Sendeelemente zugeführt. Das Zusammenfassen der eigentlichen Ausgangssignale erfolgt mittels einer separaten Koppeleinheit.

Dieses Verfahren lässt sich insbesondere unter Verwendung an sich bekannter passiver optischer Wellenlängenmultiplexer realisieren. Bei der bevorzugten Ausführungsform einer das erfindungsgemäße Verfahren realisierten Wellenlängenmultiplex-Sendeeinheit ist die optische Wellenlängenmonitoring- und Koppeleinheit bzw. die Wellenlängenmonitoringeinheit als solche in an sich bekannter Weise als Phased-Array ausgebildet.

Ein derartiges Phased-Array mit einer gewünschten Anzahl von Eingängen und einem oder mehreren Ausgängen, hat die Eigenschaft, dass ein an einem beliebigen Eingang angelegtes Sendespektrum, beispielsweise dasjenige einer Laserdiode, schmalbandig gefiltert und dem gemeinsamen Ausgang bzw. den mehreren Ausgängen zugeführt wird. Im Falle mehrerer Ausgänge liegt an jedem Ausgang das gemultiplexte Signal an, so dass auf diese Weise mehrere Übertragungsstrecken ausgeschlossen werden können. Werden die Filterspektren zwischen jedem Eingang und einem Ausgang in einem einzigen Diagramm dargestellt, so ergibt sich eine entsprechende Anzahl von unmittelbar aneinandergereihten schmalbandigen Bandpass-Charakteristika. Des Weiteren weist ein derartiges Phased-Array die Eigenschaft auf, dass diejenigen Spektralanteile eines an einen beiliebigen Eingang angelegten Sendespektrums, die außerhalb der Filter-Charakteristik zwischen dem betreffenden Eingang und dem Ausgang liegen, als Ausgangssignal an denjenigen Eingängen auftreten, in deren Filter-Charakterisitik (wiederum zwischen dem betreffenden Eingang und dem Ausgang) diese Spektralanteile fallen.

Liegt beispielsweise das Sendespektrum einer sehr schmalbandigen Laserdiode (beispielsweise eines DFB-Lasers) bei einem optimalen Betrieb der Laserdiode voll innerhalb der Filtercharakteristik zwischen dem betreffenden Eingang und dem gemeinsamen Ausgang, so kann an den hinsichtlich der Mittenwellenlänge dem betreffenden Eingang benachbarten Eingängen kein Ausgangssignal detektiert werden. Verschiebt sich dagegen die Mittenwellenlänge der Laserdiode beispielsweise infolge einer Temperaturerhöhung des Chips in einer bestimmten Richtung, so geraten zunächst die seitlichen Spektralanteile des Sendespektrums außerhalb der Bandpass-Charakteristik des betreffenden Eingangs und damit in den Bereich der Bandpass-Charakteristik des betreffenden benachbarten Eingangs. Je weiter sich das Sendespektrum in diese Richtung verschiebt, um so größer wird die an dem betreffenden benachbarten Eingang detektierbare optische Leistung.

Selbstverständlich ist es nicht erforderlich, dass sich das Sendespektrum im Fall der optimalen Position der Mittenwellenlänge voll innerhalb der Filtercharakteristik des betreffenden Eingangs befindet. Vielmehr kann es im Sinne einer möglichst exakten Erfassung bzw. Regelung der Mittenwellenlänge gewünscht sein, dass sich auch bei optimaler Lage der Mittenwellenlänge die Spektralanteile des Sendespektrums in den Bereich der jeweils benachbarten Bandpass-Charakteristika hineinerstrecken. Auf diese Weise können bereits geringste Verschiebungen der Mittenwellenlänge anhand der Zunahme bzw. Abnahme der an den benachbarten Eingängen auftretenden Ausgangsleistung festgestellt werden. Das Signal eines am entsprechenden benachbarten Eingang vorgesehenen optischen Empfangselements kann somit dazu verwendet werden um entweder festzustellen, ob sich die Mittenwellenlänge des beobachteten optischen Sendeelements innerhalb vorgegebener Grenzen hält oder aber dazu dienen, um im Sinne einer geschlossenen Regelschleife einen Betriebsparameter des optischen Sendeelements so zu beeinflussen, dass die betreffende Mittenwellenlänge innerhalb vorgegebener Grenzen konstant gehalten wird. Beispielsweise kann die Temperatur des betreffenden optischen Sendeelements durch eine geeignete Ansteuerung eines Kühlelements in der gewünschten Weise verändert werden.

Nach einer Ausführungsform der Erfindung kann eine entsprechende Wellenlängenmultiplex-Sendeeinheit so ausgebildet sein, dass jeder zweite Eingang der Wellenlängenmultiplexeinheit mit einem optischen Empfangselement und die dazwischen befindlichen Eingänge mit einem optischen Sendeelement verbunden sind. Bei dieser Ausführungsform kann mit hoher Genauigkeit gewährleistet werden, dass bereits geringste Verschiebungen der Mittenwellenlänge sämtlicher optischen Sendeelemente erfaßt und ggfs. ausgeregelt werden. Die Regelung der Sendeelemente kann dabei entweder gemeinsam erfolgen, beispielsweise nachdem die Stellgröße als Ergebnis einer Ausgleichrechnung abhängig von den detektierten Abweichungen der Mittenwellenlängen aller Sendeelemente ermittelt wurde, oder für jedes Sendeelement separat. Es ist jedoch selbstverständlich ebenfalls möglich, nur eine einzige oder auch mehrere ausgewählte Sendeelemente dadurch zu überwachen, dass an den jeweils benachbarten Eingängen beidseitig optische Empfangselemente vorgesehen sind. Dies bietet sich beispielsweise in solchen Fällen an, in denen anzunehmen ist, dass sich die einzelnen Sendeelemente in gleicher Weise verhalten. Somit kann bei Detektieren einer Verschiebung des Sendespektrums eines einzigen oder mehrerer Sendeelemente daraus geschlossen werden, dass sich die Sendespektren sämtlicher Sendeelemente in gleicher Weise verschoben haben.

Weitere Ausführungsformen der Erfindung ergeben sich aus den Unteransprüchen.

Die Erfindung wird nachfolgend anhand eines in der Zeichnung dargestellten Auführungsbeispiels näher erläutert. In der Zeichnung zeigen:
- Fig. 1: ein schematisches Blockdiagramm einer optischen Wellenlängenmultiplex- Sendeeinheit nach der Erfindung;
- Fig. 2: ein Diagramm mit der spektralen Transmissions-Charakteristik t(λ) der Wellenlängenmultiplexeinheit der Wellenlängenmultiplex-Sendeeinheit in Fig. 1;
- Fig. 3: ein schematisches Blockdiagramm einer zweiten Ausführungsform einer optischen Wellenlängenmultiplex- Sendeeinheit nach der Erfindung und
- Fig. 4: ein schematisches Blockdiagramm einer dritten Ausführungsform einer optischen Wellenlängenmultiplex- Sendeeinheit nach der Erfindung.

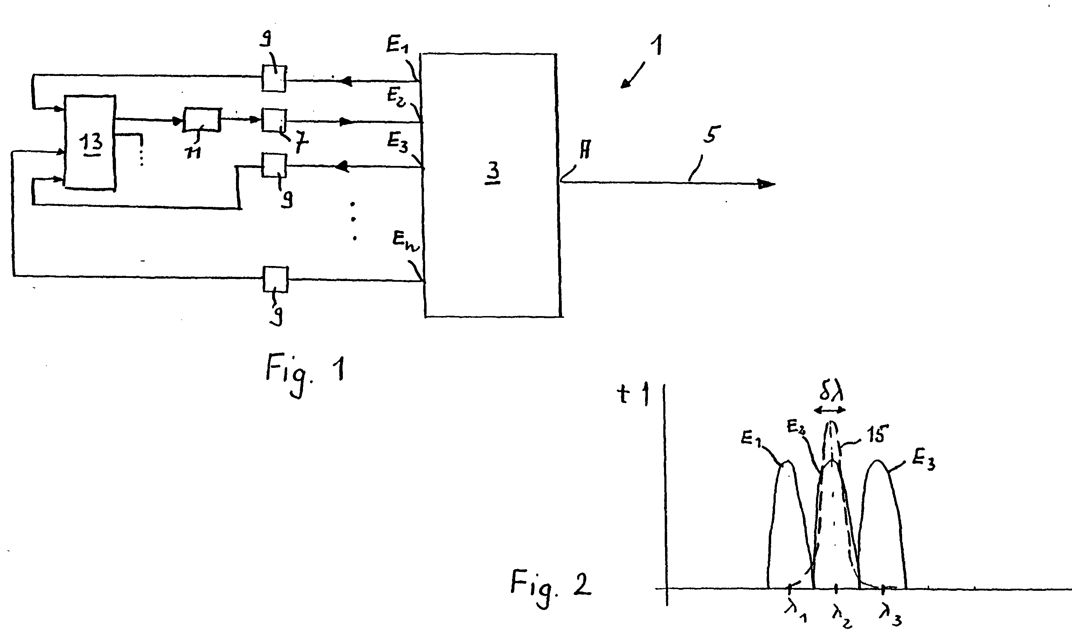

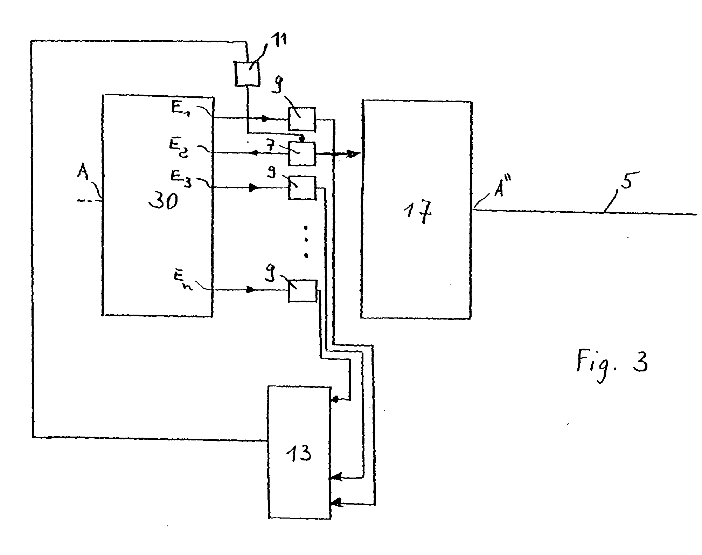

Die in Fig. 1 dargestellte Wellenlängenmultiplex-Sendeeinheit 1 umfaßt eine Wellenlängenmonitoring- und Koppeleinheit 3 mit n Eingängen E₁, E₂, E₃ bis Eₙ sowie einem Ausgang A. Der Ausgang A kann mit einem Lichtwellenleiter 5 einer Wellenlängenmultiplex-Übertragungsstrecke verbunden sein. Bei dem in Fig. 1 dargestellten Ausführungsbeispiel sind die Eingänge E₂, E₄ bis Eₙ₋₁ mit optischen Sendeelementen 7 verbunden, bei denen es sich z. B. um Laserdioden handeln kann. Die übrigen Eingänge E₁, E₃ bis Eₙ sind mit jeweils einem optischen Empfangselement 9 verbunden. Die optischen Sendeelemente 7 sind im dargestellten Ausführungsbeispiel jeweils mittels eines Kühlelements 11 gekühlt. Hierbei kann es sich beispielsweise um Peltier-Elemente handeln. Die Ausgangssignale der optischen Empfangselemente 9 sind einer Auswerte- und Steuereinheit 13 zugeführt, welche das Signal der optischen Empfangselemente 9 auswerten. Abhängig vom Ergebnis der Auswertung kann die Auswerte- und Steuereinheit 13 die Kühlelemente 11 so ansteuern, dass die Mittenfrequenz der Sendespektren der optischen Sendeelemente 7 innerhalb vorgegebener Grenzen konstant gehalten wird.

Die optische Wellenlängenmonitoring- und Koppeleinheit 3 besitzt folgende Eigenschaften: Zwischen jedem der Eingänge E₁ bis Eₙ und dem gemeinsamen Ausgang A ist ein optischer Pfad vorgesehen, in welchem eine schmalbandige Filterung mit einer Mittenwellenlänge λ₁, λ₂,. λ₃ bis λₙ erfolgt. Die Bandpass-Charakteristika der Eingänge E₁, E₂ und E₃ sind in Fig. 2 dargestellt, wobei mit t die Transmission des betreffenden optischen Pfades gezeichnet ist. Gleichzeitig ist in Fig.2 das Sendespektrum 15 des mit dem Eingang E₂ verbundenen optischen Sendeelements 7 strichliert dargestellt. Der größte Anteil des Sendespektrums 15 befindet sich innerhalb der Charakteristik des optischen Pfads zwischen dem Eingang E₂ und dem Ausgang A. Die seitlichen Randbereiche des Sendespektrums 15 des optischen Sendeelements 7 reichen bis in die Bandpass-Charakteristika zwischen dem Eingang E₁ und dem Ausgang A bzw. dem Eingang E₃ und dem Ausgang A.

Wie aus Fig. 2 ersichtlich, liegen die Bandpass-Charakteristika der benachbarten Eingänge der Wellenlängenmonitoring- und Koppeleinheit 3 vorzugsweise unmittelbar nebeneinander. Dies ist jedoch nicht zwingend erforderlich.

Allerdings ergibt sich hierdurch die optimale Nutzung der Übertragungskapazität der Übertragungsstrecke im Wellenlängenmultiplex.

Des Weiteren besitzt die Wellenlängenmonitoring- und Koppeleinheit 3 die Eigenschaft, dass diejenigen Spektralanteile eines an einem beliebigen Eingang Eᵢ angelegten Sendespektrums, die außerhalb der Bandpass-Charakteristik zwischen diesem Eingang E; und dem Ausgang A liegen, als Ausgangssignal an denjenigen Eingängen Eⱼ auftreten, in deren Bandpass-Charakteristika (wiederum zwischen dem jeweiligen Eingang Eⱼ und dem Ausgang A) die betreffenden Spektralanteile fallen.

Entsprechend dem in Fig. 2 dargestellten Beispiel treten bei einem Anliegen des Sendespektrums 15 am Eingang E₂ diejenigen spektralen Anteile des Sendespektrums 15 an den Eingängen E₁ bzw. E₃ als Ausgangssignal auf, die in die Bandpasscharakteristika dieser beiden Eingänge fallen.

Auf diese Weise ist es möglich, eine Verschiebung des Sendespektrums 15 um einen geringen Betrag δλ durch eine Auswertung der Signale der optischen Empfangselemente 9 zu ermitteln, die mit den Eingängen E₁ bzw. E₃ verbunden sind.

Eine Verschiebung des Sendespektrums 15 in Richtung kleinerer Wellenlängen wird von der Auswerte- und Steuereinheit 13 dann festgestellt, wenn das Ausgangssignal des mit dem Eingang E₁ verbundenen Empfangselement 9 eine höhere Leistung wiederspiegelt und das Ausgangssignal des mit dem Eingang E₃ verbundenen Empfangselements eine geringere Leistung, verglichen mit dem ursprünglichen Zustand.

Durch das Vorsehen von Empfangselementen an den Eingängen beidseitig des Eingangs mit dem optischen Sendeelement ist es möglich zu unterscheiden, ob das zwischen den beiden Empfangselementen befindliche Sendeelement hinsichtlich seiner Wellenlänge schwankt oder ein jeweils auf der anderen Seite der Empfangselemente 9 befindliches Sendeelement 7.

Die Wellenlängen- und Koppeleinheit 3 kann auf einfachste Weise durch die Verwendung eines Phased-Array mit einer entsprechenden Anzahl von Eingängen und einem Ausgang realisiert werden. Hierdurch ergibt sich ein äußerst geringer baulicher und damit finanzieller Aufwand. Selbstverständlich kann die Wellenlängen- und Koppeleinheit 3 jedoch auch auf andere Weise, beispielsweise unter Verwendung eines Bragg-Gitters oder mehrerer Fabry-Perot-Filter aufgebaut werden.

Die in Fig. 3 dargestellte zweite Ausführungsform umfasst anstelle einer kombinierten Wellenlängenmonitoring- und Koppeleinheit 3 eines separate Wellenlängenmonitoringeinheit 30. Diese kann im grundsätzlich genau so aufgebaut sein und die selben Eigenschaften aufweisen, wie vorstehend im Zusammenhang mit Fig. 1 für die Wellenlängenmonitoring- und Koppeleinheit 30 beschrieben. Allerdings muss die Wellenlängenmonitoringeinhiet 30 nicht auch zusätzlich das Zusammenfassen der Ausgangssignale der Sendeelemente 7 übernehmen.

Bei der in Fig. 3 dargestellten Ausführungsform sind nicht die die Sendeleistung abgebenden Ausgänge von Sendeelementen 7 mit den Eingängen E₂, E₄, ... Eₙ₋₁ verbunden, sondern von jedem Sendeelement 7 wird ein Bruchteilteil der Leistung separat ausgekoppelt und der Monitoringeinheit 30 in der bereits beschriebenen Weise zugeführt.

An den übrigen Eingängen E₁, E₃, ... Eₙ der Monitoringeinheit 30 wird die dort auftretende optische Leistung den daran angekoppelten optischen Empfangselementen zugeführt. Die Überwachung bzw. Regelung der Sendeelemente 9 erfolgt wie oben beschrieben.

Das Zusammenfassen der Sendesignale der Sendeelemente 9 auf einen gemeinsamen Ausgang A,, kann bei dieser Ausführungsform beispielsweise durch einen einfachen passiven breitbandigen m x 1 Koppler 15 erfolgen, wobei m die Anzahl der Sendeelemente bedeutet. Selbstverständlich kann das Zusammenfassen der Sendesignale auch wiederum auf mehrere gemeinsame Ausgänge erfolgen. Ist die Monitoringeinheit 30 ebenso aufgebaut wie die Wellenlängenmonitoring- und Koppeleinheit 3, beispielsweise in Form eines handelsüblichen Phased-Array, kann der Ausgang A der Monitoringeinheit 30 ungenutzt bleiben. Er kann jedoch auch zu einer weiteren Analyse des Multiplex-Sendesignals verwendet werden.

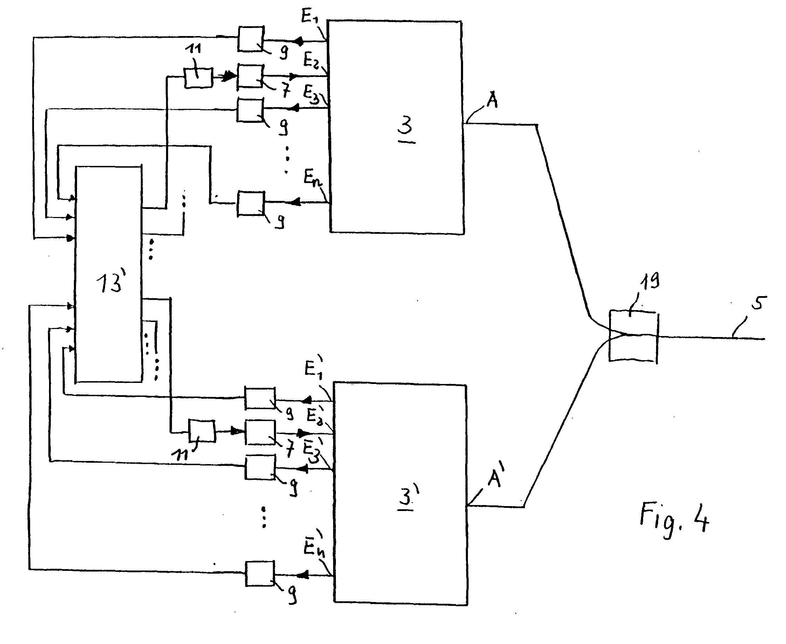

Fig. 4 zeigt eine Wellenlängenmultiplex-Sendeeinheit bei der im Prinzip zwei Sendeeinheiten gemäß Fig. 1 kaskadiert sind. Anstelle zweier Auswerte- und Steuereinheiten 13 zur Reduzierung des Aufwands jedoch nur eine einzige Auswerte- und Steuereinheit 13' verwendet. Die Ausgänge A, A' der Wellenlängenmonitoring- und Koppeleinheiten 3, 3' sind über einen optischen Koppler 15 zusammengefasst und das kombinierte optische Ausgangssignal ist der Übertragungsstrecke 5 zugeführt.

Die Wellenlängenmonitoring- und Koppeleinheiten 3, 3' sind so ausgebildet, dass die Mittenwellenlänge jedes Eingangs Eⱼ' der Einheit 3' mit der Mittenwellenlänge des Eingangs Eⱼ₋₁ der Einheit 3 übereinstimmt und der vorzugsweise konstante Abstand der einzelnen Kanäle (jeweils Eingang zu Ausgang mit einer bestimmten spektralen Breite Δλ) bezüglich der Mittenwellenlänge λⱼ bei beiden Wellenlängenmonitoring- und Koppeleinheiten 3, 3' gleich groß ist. Hierdurch ergibt sich der Vorteil, dass eine optimale Ausnutzung der Bandbreite der gewährleistet werden kann. Im Extremfall können die Kanäle der spektralen Breite Δλ unmittelbar benachbart sein, d.h. der Abstand benachbarter Kanäle ist gleich groß gewählt wie die spektrale Breite eines Kanals. Trotz dieser vollständig oder zumindest optimal genutzten Bandbreite können im dargestellten Ausführungsbeispiel die bei jeder Wellenlängenmonitoring- und Koppeleinheit 3, 3' einem Eingang mit angekoppeltem Sendeelement 7 benachbarten Eingänge für das Wellenlängenmonitoring dieses Sendeelements verwendet werden.

Dieses Kaskadieren kann selbstverständlich auch auf das Ausführungsbeispiel gemäß Fig. 3 in analoger Weise angewandt werden, wobei lediglich ein einziger (entsprechend breitbandiger) optischer Koppler 17 erforderlich ist, der eine entsprechende Anzahl von Eingängen aufweisen muss. Im übrigen gelten die vorstehenden Ausführungen im Zusammenhang mit Fig. 4.

Abschließend sei erwähnt, dass die Wellenlängenmonitoringeinheit und die kombinierte Wellenlängenmonitoring- und Koppeleinheit selbstverständlich auch auf beliebige andere Weise aufgebaut sein kann, solange das Grundprinzip verwirklicht ist, zumindest das Signal eines Sendeelements mit wenigstens einer Hochpass-, Tiefpass- oder Bandpasscharakteristik zu beaufschlagen, die so gewählt ist, dass bei einer Verschiebung des Sendespektrums um einen kleine Betrag eine Änderung der Leistung des gefilterten (Teil-) Signals erfolgt.

Bei integriert oder auf sehr engem Raum aufgebauten Wellenlängenmultiplex-Sendeeinheiten kann es bereits genügen, die Verschiebung des Sendespektrums eines Sendeelements zu erfassen bzw. zu regeln. Denn häufig werden sich die einzelnen Sendeelemente hinsichtlich Temperaturänderungen oder der Alterung ähnlich verhalten. Damit kann das durch die Analyse eines Signals gewonnene Information auch zur Regelung/Steuerung der andere Sendeelemente verwendet werden.

## Patentansprüche

1. Verfahren zur Erfassung und/oder Regelung der Sendewellenlängen von Sendeelementen einer optischen Wellenlängenmultiplex-Sendeeinheit,
a) bei dem die Ausgangssignale mehrerer optischer Sendeelemente (7) mit jeweils einem optischen Sendespektrum (15) unterschiedlicher Mittenwellenlänge (λₛⱼ) jeweils einem optischen Eingang (E₂, E₄,..., Eₙ₁) einer optischen Wellenlängenmonitoring- und Koppeleinheit (3) zugeführt werden, welche die Ausgangssignale an einem oder mehreren optischen Ausgängen (A) zu einem Wellenlängenmultiplexsignal zusammenführt,
b) wobei die Wellenlängenmonitoring- und Koppeleinheit (3) so ausgebildet ist, dass zwischen einem, mehreren oder allen Eingängen (E₂, E₄,..., Eₙ₋₁), welchen das Ausgangssignal eines Sendeelements (7) zugeführt wird, und einem oder mehreren weiteren, nicht mit Sendeelementen (7) verbundenen Eingängen (E₁, E₃,..., Eₙ) ein optischer Pfad vorhanden ist, in dem eine schmalbandige, Hochpass- oder Tiefpassfilterung erfolgt,
c) wobei die Filtercharakteristik in dem Pfad so gewählt wird, dass sich bei einer Verschiebung der Mittenwellenlänge des Sendespektrums (15) eines Sendeelements (7), dessen Signal in diesen Pfad gelangt, die gesamte spektrale Leistung des mit der gewählten Charakteristik gefilterten Signals verändert, und
d) bei dem das an dem einen oder den mehreren weiteren Eingängen (E₁, E₃,..., Eₙ) auftretende gefilterte optische Signal jeweils einem optischen Empfangselement (9) zugeführt wird, dessen Ausgangssignal zur Erfassung der Lage und/oder zur Regelung der Lage des Sendespektrums (15) eines oder mehrerer der optischen Sendeelemente (7) ausgewertet wird.

2. Verfahren zur Erfassung und/oder Regelung der Sendewellenlängen von Sendeelementen einer optischen Wellenlängenmultiplex-Sendeeinheit,
a) bei dem die Ausgangssignale mehrerer optischer Sendeelemente (7) mit jeweils einem optischen Sendespektrum (15) unterschiedlicher Mittenwellenlänge (λₛⱼ) einer Koppeleinheit (17) zugeführt wird, welche die Sendepektren (15) der optischen Sendeelemente (7) an einem oder mehreren optischen Ausgängen (A) zusammenführt,
b) bei dem ein geringer Bruchteil der Sendeleistung des Ausgangssignals eines oder mehrerer Sendeelemente (7) jeweils einem optischen Eingang (E₂, E₄,..., Eₙ₁) einer optischen Wellenlängenmonitoring-Einheit (30) zugeführt wird,
c) wobei die Wellenmonitoring-Einheit (30) so ausgebildet ist, dass zwischen einem, mehreren oder allen Eingängen (E₂, E₄,..., Eₙ₋₁), welchen der Bruchteil der Sendeleistung des Ausgangssignals eines Sendeelements (7) zugeführt wird, und einem oder mehreren weiteren, nicht mit Sendeelementen (7) verbundenen Eingängen (E₁, E₃,..., Eₙ) ein optischer Pfad vorhanden ist, in dem eine schmalbandige, Hochpass- oder Tiefpassfilterung erfolgt,
d) wobei die Filtercharakteristik in dem Pfad so gewählt wird, dass sich bei einer Verschiebung der Mittenwellenlänge des Sendespektrums (15) eines Sendeelements (7), dessen Signal in diesen Pfad gelangt, die gesamte spektrale Leistung des mit der gewählten Charakteristik gefilterten Signals verändert, und
e) bei dem das an dem einen oder den mehreren weiteren Eingängen (E₁, E₃,..., Eₙ) auftretende gefilterte optische Signal einem optischen Empfangselement (9) zugeführt wird, dessen Ausgangssignal zur Erfassung der Lage oder zur Regelung der Lage des Sendespektrums (15) eines oder mehrerer der optischen Sendeelemente (7) ausgewertet wird.

3. Verfahren nach Anspruch 1 oder 2, **dadurch gekennzeichnet, dass** das Ausgangssignal des wenigstens einen optischen Empfangselements (9) hinsichtlich eines Überschreitens und/oder Unterschreitens jeweils eines vorbestimmbaren Schwellwerts überwacht wird und bei Detektieren eines Überschreitens oder Unterschreitens ein Fehlersignal erzeugt wird.

4. Verfahren nach einem der vorhergehenden Ansprüche, **dadurch gekennzeichnet, dass** das Ausgangssignal des wenigstens einen optischen Empfangselements (9) zur Regelung eines die Mittenwellenlänge (λ₂, λ₄,..., λₙ₋₁) wenigstens eines optischen Sendeelements (7) beeinflussendenden Kenngröße verwendet wird.

5. Optische Wellenlängenmultiplex-Sendeeinheit
a) mit mehreren optischen Sendeelementen (7) mit jeweils einem optischen Sendespektrum (15) unterschiedlicher Mittenwellenlänge (λ ₛⱼ), deren Ausgangssignal jeweils einem optischen Eingang (E₂, E₄,..., Eₙ₁) einer optischen Wellenlängenmonitoring- und Koppeleinheit (3) zugeführt ist, welche die Ausgangssignale an einem oder mehreren optischen Ausgängen (A) zu einem Wellenlängenmultiplexsignal zusammenführt,
b) wobei die Wellenlängenmonitoring- und Koppeleinheit (3) so ausgebildet ist, dass zwischen einem, mehreren oder allen Eingängen (E₂, E₄,..., Eₙ₋₁), welchen das Ausgangssignal eines Sendeelements (7) zugeführt ist, und einem oder mehreren weiteren, nicht mit Sendeelementen (7) verbundenen Eingängen (E₁, E₃,..., Eₙ) ein optischer Pfad vorhanden ist, in dem eine schmalbandige, Hochpass- oder Tiefpassfilterung erfolgt,
c) wobei die Filtercharakteristik in dem Pfad so gewählt ist, dass sich bei einer Verschiebung der Mittenwellenlänge des Sendespektrums (15) eines Sendeelements (7), dessen Signal in diesen Pfad gelangt, die gesamte spektrale Leistung des mit der gewählten Charakteristik gefilterten Signals verändert, und
d) mit einem oder mehreren optischen Empfangselementen (9), welche jeweils mit einem der weiteren Eingänge (E₁, E₃,..., Eₙ) verbunden sind und welche das an diesen auftretende gefilterte optische Signal detektieren, und
e) und mit einer Auswerte- und Steuereinheit (13), welcher das Ausgangssignal des wenigstens einen Empfangselements (9) zugeführt ist, und welche das Signal des Empfangselements (9) zur Erfassung der Lage und/oder zur Regelung der Lage des Sendespektrums (15) eines oder mehrerer der optischen Sendeelemente (7) auswertet.

6. Optische Wellenlängenmultiplex-Sendeeinheit
a) mit mehreren optischen Sendeelementen (7) mit jeweils einem optischen Sendespektrum (15) unterschiedlicher Mittenwellenlänge (λ ₛⱼ), deren Ausgangssignal jeweils einem optischen Eingang (E₂, E₄,..., Eₙ₁) einer optischen Koppeleinheit (17) zugeführt ist, welche die Ausgangssignale an einem oder mehreren optischen Ausgängen (A) zu einem Wellenlängenmultiplexsignal zusammenführt,
b) wobei ein geringer Bruchteil der Sendeleistung des Ausgangssignals eines oder mehrerer Sendeelemente (7) jeweils einem optischen Eingang (E₂, E₄,..., Eₙ₁) einer optischen Wellenlängenmonitoring-Einheit (30) zugeführt ist, und
c) wobei die Wellenmonitoring-Einheit (30) so ausgebildet ist, dass zwischen einem, mehreren oder allen Eingängen (E₂, E₄,..., Eₙ₋₁), welchen der Bruchteil der Sendeleistung des Ausgangssignals eines Sendeelements (7) zugeführt wird, und einem oder mehreren weiteren, nicht mit Sendeelementen (7) verbundenen Eingängen (E₁, E₃,..., Eₙ) ein optischer Pfad vorhanden ist, in dem eine schmalbandige, Hochpass- oder Tiefpassfilterung erfolgt,
d) wobei die Filtercharakteristik in dem Pfad so gewählt wird, dass sich bei einer Verschiebung der Mittenwellenlänge des Sendespektrums (15) eines Sendeelements (7), dessen Signal in diesen Pfad gelangt, die gesamte spektrale Leistung des mit der gewählten Charakteristik gefilterten Signals verändert,
e) mit einem oder mehreren optischen Empfangselementen (9), welche jeweils mit einem der weiteren Eingänge (E₁, E₃,..., Eₙ) verbunden sind und welche das an diesen auftretende gefilterte optische Signal detektieren, und
f) mit einer Auswerte- und Steuereinheit (13), welcher das Ausgangssignal des wenigstens einen Empfangselements (9) zugeführt ist, und welche das Signal des Empfangselements (9) zur Erfassung der Lage und/oder zur Regelung der Lage des Sendespektrums (15) eines oder mehrerer der optischen Sendeelemente (7) auswertet.

7. Optische Wellenlängenmultiplex-Sendeeinheit nach Anspruch 5 oder 6, **dadurch gekennzeichnet, dass** die Wellenlängenmonitoring- und Koppeleinheit (3) oder die Wellenlängenmonitoringeinheit (30) so ausgebildet sind, dass jedem Eingang eine schmalbandige Filtercharakteristik mit einer für jeden Eingang unterschiedlichen Mittenwellenlänge (λ₁, λ₂, ..., λₙ) zugeordnet ist und dass zwischen allen Eingängen (E₁, E₂,..., Eₙ) optische Pfade vorgesehen sind, in denen das darin geführte optische Signal zumindest mit derjenigen Filtercharakteristik gefiltert wird, die hinsichtlich des Signalwegs dem am Ende des optischen Pfads liegenden Eingang (E₁, E₂,..., Eₙ) zugeordnet ist.

8. Optische Wellenlängenmultiplex-Sendeeinheit nach Anspruch 7, **dadurch gekennzeichnet, dass** die Wellenlängenmonitoring- und Koppeleinheit (3) oder die Wellenlängenmonitoringeinheit als Phased-Array ausgebildet oder unter Verwendung eines Bragg-Gitters realisiert ist.

9. Optische Wellenlängenmultiplex-Sendeeinheit nach einem der Ansprüche 7 oder 8, **dadurch gekennzeichnet, dass** bezüglich der Mittenwellenlängen der (λ₁, λ₂, ..., λₙ) Filtercharakteristiken jeder zweite Eingang (E₁, E₃,..., Eₙ) der Wellenlängenmonitoring- und Koppeleinheit (3) oder der Wellenlängenmonitoringeinheit (3) mit einem optischen Empfangselement (7) und die übrigen Eingänge (E₂, E₄,..., Eₙ) den Ausgangssignalen eines optischen Sendeelements (7) beaufschlagt sind.

10. Optische Wellenlängenmultiplex-Sendeeinheit nach Anspruch 9, **dadurch gekennzeichnet, dass** die Auswerte- und Steuereinheit (13) jedes Spektrum der Sendeelemente (7) durch Auswertung der Ausgangssignale zumindest beiden mit den benachbarten Eingängen verbundenen Empfangselemente erfasst und/oder hinsichtlich der Mittenwellenlänge regelt.

11. Optische Wellenlängenmultiplex-Sendeeinheit nach Anspruch 9 oder 10, **dadurch gekennzeichnet, dass** zwei Wellenlängenmonitoring- und Koppeleinheiten (3) vorgesehen sind, wobei die den Eingängen (E₁, E₂,..., Eₙ) zugeordneten Filtercharakteristika hinsichtlich der Mittenwellenlänge im Wesentlichen um einen Eingang gegeneinander versetzt sind und dass die Ausgangssignale der zwei Wellenlängenmonitoring- und Koppeleinheiten (3) mittels einer Koppeleinheit (19) zu einem Gesamt-Wellenlängenmultiplexsignal zusammengefasst sind.

12. Optische Wellenlängenmultiplex-Sendeeinheit nach Anspruch 9 oder 10, **dadurch gekennzeichnet, dass** zwei Wellenlängenmonitoringeinheiten (30) vorgesehen sind, wobei die den Eingängen (E₁, E₂,..., Eₙ) zugeordneten Filtercharakteristika hinsichtlich der Mittenwellenlänge im Wesentlichen um einen Eingang gegeneinander versetzt sind und dass die Ausgangssignale der zwei Wellenlängenmonitoringeinheiten (30) mittels einer gemeinsamen Koppeleinheit (17) zu einem Gesamt-Wellenlängenmultiplexsignal zusammengefasst sind.

## Claims

1. Method for the detection and/or regulation of the transmission wavelengths of transmission elements of an optical wavelength multiplex transmission unit,
a) in which the output signals of a plurality of optical transmission elements (7), having each an optical transmission spectrum (15) of different centre wavelength (λₛⱼ), are each delivered to an optical input (E₂, E₄, ..., Eₙ₁) of an optical wavelength monitoring and coupling unit (3) which combines the output signals at one or a plurality of optical outputs (A) to a wavelength multiplex signal,
b) the wavelength monitoring and coupling unit (3) being so constituted that between one, more or all inputs (E₂, E₄, ..., Eₙ₋₁) to which the output signal of a transmission element (7) is delivered, and one or more further inputs (E₁, E₃, ..., Eₙ) not connected with transmission elements (7), there is present an optical path in which a narrow-band, high-pass or low-pass filtering is effected,
c) the filter characteristic in the path being so selected that in the case of a displacement of the centre wavelength of the transmission spectrum (15) of a transmission element (7), the signal of which enters into this path, the complete spectral output of the signal filtered with the selected characteristic alters, and
d) in which the filtered optical signal appearing at the one or at the more further inputs (E₁, E₃, ..., Eₙ) is delivered in each case to an optical receiving element (9) the output signal of which is evaluated for detecting the disposition and/or for regulating the disposition of the transmission spectrum (15) of one or more of the optical transmission elements (7).

2. Method for the detection and/or regulation of the transmission wavelength of transmission elements of an optical wavelength multiplex transmission unit,
a) in which the output signals of a plurality of optical transmission elements (7), having each an optical transmission spectrum (15) of different centre wavelength (λₛⱼ), are delivered to a coupling unit (17) which combines the tranamission spectrums (15) of the optical transmission elements (7) at one or more optical outputs (A),
b) in which a small fraction of the transmission power of the output signal of one or more transmission elements (7) is in each case delivered to an optical input (E₂, E₄, ..., Eₙ₁) of an optical wavelength monitoring unit (30),
c) the wave monitoring unit (30) being so constituted that between one, more or all inputs (E₂, E₄, ..., Eₙ₋₁) to which a fraction of the transmission power of the output signal of a transmission element (7) is delivered, and one or more further inputs (E₁, E₃, ..., Eₙ) not connected with transmission elements (7), there is present an optical path in which a narrow-band, high-pass or low-pass filtering is effected,
d) the filter characteristic in the path being so selected that in the case of a displacement of the centre wavelength of the transmission spectrum (15) of a transmission element (7), the signal of which enters into this path, the complete spectral output of the signal filtered with the selected characteristic alters, and
e) in which the filtered optical signal appearing at the one or at the more further inputs (E₁, E₃, ..., Eₙ) is delivered to an optical receiving element (9) the output signal of which is evaluated for detecting the disposition or for regulating the disposition of the transmission spectrum (15) of one or more of the optical transmission elements (7).

3. Method according to claim 1 or 2, **characterised in that** the output signal of the at least one optical receiving element (9) is monitored with regard to an overshooting and/or undershooting of respective predeterminable threshold values, and upon detection of an overshoot or undershoot an error signal is generated.

4. Method according to any preceding claim, **characterised in that** the output signal of the at least one optical receiving element (9) is employed for the regulation of a parameter which influences the centre wavelength (λ₂, λ₄, ..., λₙ₋₁) of at least one optical transmission element (7).

5. Optical wavelength multiplex transmission unit
a) having a plurality of optical transmission elements (7), each with an optical transmission spectrum (15) of different centre wavelength (λₛⱼ), the output signal of which is in each case delivered to an optical input (E₂, E₄, ..., Eₙ₁) of an optical wavelength monitoring and coupling unit (3) which combines the output signals at one or more optical outputs (A) to a wavelength multiplex signal,
b) the wavelength monitoring and coupling unit (3) being so constituted that between one, more or all inputs (E₂, E₄, ..., Eₙ₋₁) to which the output signal of a transmission element (7) is delivered, and one or more further inputs (E₁, E₃, ..., Eₙ) not connected with transmission elements (7), there is present an optical path in which a narrow-band, high-pass or low-pass filtering is effected,
c) the filter characteristic in the path being so selected that in the case of a displacement of the centre wavelength of the transmission spectrum (15) of a transmission element (7), the signal of which enters into this path, the complete spectral output of the signal filtered with the selected characteristic alters, and
d) having one or more optical receiving elements (9) which are each connected with one of the further inputs (E₁, E₃, ..., Eₙ) and which detect the filtered optical signal appearing thereat, and
e) having an evaluation and control unit (13) to which the output signal of the at least one receiving element (9) is delivered, and which evaluates the signal of the receiving element (9) for detecting the disposition and/or for regulating the disposition of the transmission spectrum (15) of one or more of the optical transmission elements (7).

6. Optical wavelength multiplex transmission unit
a) having a plurality of optical transmission elements (7), each with an optical transmission spectrum (15) of different centre wavelength (λₛⱼ), the output signal of which is in each case delivered to an optical input (E₂, E₄, ..., Eₙ₁) of an optical coupling unit (17) which combines the output signals at one or a plurality of optical outputs (A) to a wavelength multiplex signal,
b) a small fraction of the transmission power of the output signal of one or more transmission elements (7) being in each case delivered to an optical input (E₂, E₄, ..., Eₙ₁) of an optical wavelength monitoring unit (30),
c) the wave monitoring unit (30) being so constituted that between one, more or all inputs (E₂, E₄, ..., Eₙ₋₁) to which a fraction of the transmission power of the output signal of a transmission element (7) is delivered, and one or more further inputs (E₁, E₃, ..., Eₙ) not connected with transmission elements (7), there is present an optical path in which a narrow-band, high-pass or low-pass filtering is effected,
d) the filter characteristic in the path being so selected that in the case of a displacement of the centre wavelength of the transmission spectrum (15) of a transmission element (7), the signal of which enters into this path, the complete spectral output of the signal filtered with the selected characteristic alters,
e) having one or more optical receiving elements (9) which are each connected with one of the further inputs (E₁, E₃, ..., Eₙ) and which detect the filtered optical signal appearing thereat, and
f) having an evaluation and control unit (13) to which the output signal of the at least one receiving element (9) is delivered, and which evaluates the signal of the receiving element (9) for detecting the disposition and/or for regulating the disposition of the transmission spectrum (15) of one or more of the optical transmission elements (7).

7. Optical wavelength multiplex transmission unit according to claim 5 or 6, **characterised in that** the wavelength monitoring and coupling unit (3) or the wavelength monitoring unit (30) are so constituted that with each input there is associated a narrow-band filter characteristic having a centre wavelength (λ₁, λ₂, ..., λₙ) different for each input, and **in that** between all inputs (E₁, E₂, ..., Eₙ) optical paths are provided in which the optical signal carried therein is filtered at least with that filter characteristic which is associated with the input (E₁, E₂, ..., Eₙ) which with regard to the signal path lies at the end of the optical path.

8. Optical wavelength multiplex transmission unit according to claim 7, **characterised in that** the wavelength monitoring and coupling unit (3) or the wavelength monitoring unit is constituted as a phased array or is realised with the employment of a Bragg grating.

9. Optical wavelength transmission unit according to claim 7 or 8, **characterised in that** with regard to the centre wavelengths of the (λ₁, λ₂, ..., λₙ) filter characteristics each second input (E₁, E₃, ..., Eₙ) of the wavelength monitoring and coupling unit (3) or of the wavelength monitoring unit (3) has an optical receiving element (7) applied thereto and the remaining inputs (E₂, E₄, ..., Eₙ) have applied thereto the output signals of an optical transmission element (7).

10. Optical wavelength multiplex transmission unit according to claim 9, **characterised in that** the evaluation and control unit (13), through evaluation of the output signals of at least the two receiving elements connected with the neighbouring inputs, detects each spectrum of the transmission elements (7) and/or regulates them with regard to the centre wavelength.

11. Optical wavelength multiplex transmission unit according to claim 9 or 10, **characterised in that** two wavelength monitoring and coupling units (3) are provided, the filter characteristics associated with the inputs (E₁, E₂, ..., Eₙ) being, with regard to the centre wavelength, offset in substance by one input with respect to one another, and **in that** the output signals of the two wavelength monitoring and coupling units (4) are combined by means of a coupling unit (19) to a total wavelength multiplex signal.

12. Optical wavelength multiplex transmission unit according to claim 9 or 10, **characterised in that** two wavelength monitoring units (30) are provided, the filter characteristics associated with the inputs (E₁, E₂, ..., Eₙ) being, with regard to the centre wavelength, offset in substance by one input with respect to one another, and **in that** the output signals of the two wavelength monitoring units (30) are combined by means of a common coupling unit (17) to a total wavelength multiplex signal.

## Revendications

1. Procédé de détection et/ou de régulation des longueurs d'onde d'émission d'éléments d'émission d'une unité d'émission optique à multiplexage des longueurs d'onde,
a) selon lequel les signaux de sortie de plusieurs éléments émetteurs optiques (7) possédant chacun un spectre d'émission optique (15) ayant une longueur d'onde centrale (λₛⱼ) différente sont envoyés respectivement à une entrée optique (E₂, E₄, ..., Eₙ₁) d'une unité optique de contrôle de longueurs d'onde et de couplage (3) qui rassemble les signaux de sortie présents sur une ou plusieurs sorties optiques (A) pour former un signal multiplex de longueurs d'onde,
b) dans lequel l'unité de contrôle des longueurs d'onde et de couplage (3) est agencée de telle sorte qu'entre une, plusieurs ou toutes les entrées (E₂, E₄, ..., Eₙ₋₁), auxquelles le signal de sortie d'un élément d'émission (7) est envoyé, et une ou plusieurs autres entrées (E₁, E₃, ..., Eₙ) non reliées à des éléments d'émission (7) est présente une voie optique, dans laquelle s'effectue un filtrage passe-haut ou un filtrage passe-bas à bande étroite,
c) la caractéristique de filtre dans la voie étant choisie de manière que lors d'un décalage de la longueur d'onde centrale du spectre d'émission (15) d'un élément d'émission (7), dont le signal parvient dans cette voie, la puissance spectrale totale du signal filtré avec la caractéristique choisie est modifiée, et
d) selon lequel le signal optique filtré, qui apparaît sur l'autre ou la pluralité d'autres entrées (E₁, E₃, ..., Eₙ) est envoyé respectivement à un élément de réception optique (9), dont le signal de sortie est évalué pour la détection de la position et/ou pour la régulation de la position du spectre d'émission (15) d'un ou de plusieurs des éléments d'émission optique (7).

2. Procédé de détection et/ou de régulation des longueurs d'onde d'émission d'éléments d'émission d'une unité d'émission optique à multiplexage des longueurs d'onde,
a) dans lequel les signaux de sortie de plusieurs éléments émetteurs optiques (7) comportant chacun un spectre d'émission optique (15) ayant une longueur d'onde centrale différente (λₛⱼ) sont envoyés à une unité de couplage (17), qui rassemble les spectres d'émission (15) des éléments d'émission optiques (7) sur une ou plusieurs sorties optiques (A),
b) selon lequel une faible fraction de la puissance d'émission du signal de sortie d'un ou plusieurs éléments d'émission (7) est envoyée à une entrée optique (E₂, E₃, ..., Eₙ₁) d'une unité optique (30) de contrôle des longueurs d'onde,
c) l'unité (30) de contrôle des longueurs d'onde étant agencée de telle sorte qu'entre une, plusieurs ou toutes les entrées (E₂, E₄, ..., Eₙ₋₁), auxquelles la fraction de la puissance d'émission du signal de sortie d'un élément d'émission(7) est envoyée, et une ou plusieurs autres entrées (E₁, E₃, ..., Eₙ) non reliées à des éléments d'émission (7) est présente une voie optique, dans laquelle s'effectue un filtrage passe-haut ou un filtrage passe-bas à bande étroite,
d) selon lequel la caractéristique de filtre dans la voie est choisie de manière que lors d'un décalage de la longueur d'onde centrale du spectre d'émission (15) d'un élément d'émission optique (7), dont le signal parvient dans cette voie, la puissance spectrale totale du signal filtré avec la caractéristique choisie est modifiée, et
e) selon lequel le signal optique filtré, qui apparaît sur l'autre ou la pluralité d'autres entrées (E₁, E₃, ..., Eₙ) est envoyé respectivement à un élément de réception optique (9), dont le signal de sortie est évalué pour la détection de la position et/ou pour la régulation de la position du spectre d'émission (15) d'un ou au moins des éléments d'émission optique (7).

3. Procédé selon la revendication 1 ou 2, **caractérisé en ce que** le signal de sortie du au moins un élément de réception optique (9) est contrôlé en ce qui concerne un dépassement par le haut et/ou par le bas d'une valeur de seuil prédéterminable respective et un signal d'erreur est produit lors de la détection d'un dépassement par le haut ou par le bas.

4. Procédé selon l'une des revendications précédentes, **caractérisé en ce que** le signal de sortie du au moins un élément de réception optique (9) est utilisé pour régler une grandeur caractéristique qui influe sur la longueur d'onde centrale (λ₂, λ₄, ..., λₙ₋₁) d'au moins un élément d'émission optique (7).

5. Unité d'émission optique à multiplexage des longueurs d'onde
a) comportant plusieurs éléments d'émission optique (7) possédant chacun un spectre d'émission optique (15) ayant une longueur d'onde centrale (λₛⱼ) différente, dont les signaux de sortie sont envoyés respectivement à une entrée optique (E₂, E₄, ..., Eₙ₁) d'une unité optique (3) de contrôle de longueurs d'onde et de couplage, qui rassemble les signaux de sortie présents sur une ou plusieurs sorties optiques (A) pour former un signal multiplex de longueurs d'onde,
b) l'unité (3) de contrôle des longueurs d'onde et de couplage est agencée de telle sorte qu'entre une, plusieurs ou toutes les entrées (E₂, E₄, ..., Eₙ₋₁), auxquelles le signal de sortie d'un élément d'émission (7) est envoyé, et une ou plusieurs autres entrées (E₁, E₃, ..., Eₙ) non reliées à des éléments d'émission (7) est présente une voie optique, dans laquelle s'effectue un filtrage passe-haut ou un filtrage passe-bas à bande étroite,
c) la caractéristique de filtre dans la voie étant choisie de manière que lors d'un décalage de la longueur d'onde centrale du spectre d'émission (15) d'un élément d'émission optique (7), dont le signal parvient dans cette voie, la puissance spectrale totale du signal filtré avec la caractéristique choisie est modifiée, et
d) comportant un ou plusieurs éléments de réception optique (9), qui sont reliés respectivement à l'une des autres entrées (E₁, E₃, ..., Eₙ) et qui détectent le signal optique filtré apparaissant au niveau de ces entrées, et
e) comportant une unité d'évaluation et de commande (13), à laquelle est envoyé le signal de sortie du au moins un élément de réception (9) et qui évalue le signal de l'élément de réception (9) pour la détection de la position et/ou la régulation de la position du spectre d'émission (15) d'un ou de plusieurs des éléments d'émission optique (7).

6. Unité d'émission optique à multiplexage des longueurs d'onde
a) comportant plusieurs éléments d'émission optique (7) possédant chacun un spectre d'émission optique (15) ayant une longueur d'onde centrale (λₛⱼ) différente, dont les signaux de sortie sont envoyés respectivement à une entrée optique (E₂, E₄, ..., Eₙ₁) d'une unité (17) de couplage optique qui rassemble les signaux de sortie présents sur une ou plusieurs sorties optiques (A) pour former un signal multiplex de longueurs d'onde,
b) une faible fraction de la puissance du signal de sortie d'un ou de plusieurs éléments d'émission (7) étant envoyée respectivement à une entrée optique (E₂, E₄, ..., Eₙ₁) d'une unité optique (30) de contrôle des longueurs d'onde, et
c) l'unité (30) de contrôle des longueurs d'onde étant agencée de telle sorte qu'entre une, plusieurs ou toutes les entrées (E₂, E₄, ..., Eₙ₋₁), auxquelles la fraction de la puissance d'émission du signal de sortie d'un élément d'émission optique (7) est envoyée, et une ou plusieurs autres entrées (E₁, E₃, ..., Eₙ) non reliées à des éléments d'émission (7) est présente une voie optique, dans laquelle s'effectue un filtrage passe-haut ou un filtrage passe-bas à bande étroite,
d) la caractéristique de filtre dans la voie étant choisie de manière que lors d'un décalage de la longueur d'onde centrale du spectre d'émission (15) d'un élément d'émission optique (7), dont le signal parvient dans cette voie, la puissance spectrale totale du signal filtré avec la caractéristique choisie est modifiée, et,
e) comportant un ou plusieurs éléments de réception optique (9), qui sont reliés respectivement à l'une des autres entrées (E₁, E₃, ..., Eₙ) et qui détectent le signal optique filtré apparaissant au niveau de ces entrées, et
f) comportant une unité d'évaluation et de commande (13), à laquelle est envoyé le signal de sortie du au moins un élément de réception (9) et qui évalue le signal de l'élément de réception (9) pour la détection de la position et/ou la régulation de la position du spectre d'émission (15) d'un ou de plusieurs des éléments d'émission optique (7).

7. Unité optique d'émission à multiplexage des longueurs d'onde selon la revendication 5 ou 6, **caractérisée en ce que** l'unité (3) de contrôle des longueurs d'onde et de couplage ou l'unité (30) de contrôle des longueurs d'onde sont agencées de telle sorte qu'à chaque entrée est associée une caractéristique de filtre à bande étroite comportant une longueur d'onde centrale (λ₁, λ₂, ..., λₙ) différente pour chaque entrée et qu'entre toutes les entrées (E₁, E₂, ..., Eₙ) sont prévues des voies optiques, dans lesquelles le signal optique guidé dans ces voies est filtré au moins avec la caractéristique de filtre qui est associée, en rapport avec le trajet du signal, à l'entrée (E₁, E₂, ..., Eₙ) située à l'extrémité de la voie optique.

8. Unité d'émission optique à multiplexage des longueurs d'onde selon la revendication 7, **caractérisée en ce que** l'unité (3) de contrôle des longueurs d'onde et de couplage ou l'unité de contrôle des longueurs d'onde est agencée sous la forme d'un phased-array ou est réalisée au moyen d'un réseau de Bragg.

9. Unité d'émission optique à multiplexage des longueurs d'onde selon l'une des revendications 7 ou 8, caractérisée en ce qui concerne les longueurs d'onde centrales (λ₁, λ₂, ..., λₙ), des caractéristiques de filtre, une entrée (E₁, E₂, ..., Eₙ) sur deux de l'unité (3) de contrôle de longueur d'onde et de couplage ou de l'unité (3) de contrôle des longueurs d'onde est chargée avec un élément de réception optique (7) et les autres entrées (E₂, E₄, ..., Eₙ) sont chargées par les signaux de sortie d'un élément d'émission optique (7).

10. Unité d'émission optique à multiplexage des longueurs d'onde selon la revendication 9, **caractérisée en ce que** l'unité d'évaluation et de commande (13) détecte chaque spectre des éléments d'émission (7) par évaluation des signaux de sortie, au moins des deux éléments de réception reliés aux entrées voisines et/ou règle la longueur d'onde centrale de ces éléments.

11. Elément d'émission optique à multiplexage des longueurs d'onde selon la revendication 9 ou 10, **caractérisé en ce qu'**il est prévu deux unités (3) de contrôle des longueurs d'onde et de couplage, les caractéristiques de filtre associées aux entrées (E₁, E₂, ..., Eₙ) étant décalées les unes par rapport aux autres essentiellement d'une entrée en ce qui concerne la longueur d'onde centrale, et que les signaux de sortie des deux unités (3) de contrôle des longueurs d'onde et de couplage sont rassemblés au moyen d'une unité de couplage (19) pour former un signal multiplex global des longueurs d'onde.

12. Unité d'émission optique à multiplexage des longueurs d'onde selon la revendication 9 ou 10, caractérisée ce qu'il prévu deux unités (30) de contrôle des longueurs d'onde, les caractéristiques de filtre associées aux entrées (E₁, E₂, ..., Eₙ) étant décalées les unes par rapport aux autres essentiellement d'une entrée en ce qui concerne la longueur d'onde centrale, et que les signaux de sortie des deux unités (3) de contrôle des longueurs d'onde sont rassemblés au moyen d'une unité de couplage (17) commune pour former un signal multiplex global des longueurs d'onde.
